## Europäisches Patentamt
## European Patent Office
## Office européen des brevets

(11) Veröffentlichungsnummer: **0 207 387 B1**

(12) # EUROPÄISCHE PATENTSCHRIFT

(45) Veröffentlichungstag der Patentschrift:
**16.05.90**

(51) Int. Cl.⁵: **C08G 65/46**, C02F 9/00

(21) Anmeldenummer: **86108387.1**

(22) Anmeldetag: **19.06.86**

(54) **Verfahren zur Rückgewinnung der Aminkomponente bei der Polyphenylethersynthese.**

(30) Priorität: **22.06.85 DE 3522468**

(43) Veröffentlichungstag der Anmeldung:
**07.01.87 Patentblatt 87/2**

(45) Bekanntmachung des Hinweises auf die Patenterteilung:
**16.05.90 Patentblatt 90/20**

(84) Benannte Vertragsstaaten:
**BE DE FR GB IT NL**

(56) Entgegenhaltungen:
**US-A- 4 071 500**

(73) Patentinhaber: **BASF Aktiengesellschaft,
Carl-Bosch-Strasse 38, D-6700 Ludwigshafen(DE)**

(72) Erfinder: **Mitulla, Konrad, Dr., Schwalbenweg 31,
D-6700 Ludwigshafen(DE)**
Erfinder: **Hambrecht, Jürgen, Dr., Am Klosterwald 31,
D-4400 Münster-Hiltrup(DE)**
Erfinder: **Marquardt, Siegfried, Georg-Biundo-Strasse 9,
D-6712 Bobenheim-Roxheim(DE)**
Erfinder: **Brandt, Hermann, Dr., Keltenstrasse 30,
D-6707 Schifferstadt(DE)**
Erfinder: **Dreher, Hermann, Dr., Im Waldwinkel 5,
D-6104 Seeheim-Jugenheim 1(DE)**
Erfinder: **Sander, Bruno, Dr., Moerikestrasse 10,
D-6700 Ludwigshafen(DE)**

ACTORUM AG

## Beschreibung

Die Erfindung betrifft ein Verfahren zur Rückgewinnung der Aminkomponenten, die bei der Herstellung hochmolekularer Polyphenylether aus einwertigen Phenolen durch oxidative Kupplungsreaktion mit Sauerstoff in Anwesenheit eines Katalysatorkomplexes aus einem Kupfersalz und einem organischen Amin in Gegenwart eines organischen Lösungsmittels anfallen, wenn mit einem Komplexierungsmittel der Kupfer-Amin-Katalysator aus der organischen Phase extrahiert wird.

Es ist bereits bekannt, die Polymerisationsreaktion bei der Herstellung von Polyphenylenethern in organischen Lösungsmitteln dadurch zu unterbrechen, daß der Katalysator aus dem Reaktionsmedium entfernt wird. Dies geschieht durch Gegenstromextraktionsverfahren unter Verwendung von wäßrigen Lösungen von organischen oder anorganischen Säuren (vgl. US-A 3 630 995). Es werden auch Polycarbonsäuren oder Polyaminocarbonsäuren (vgl. US-A 3 838 102) oder andere Chelatisierungsmittel wie Nitrilotriessigsäure und ihre Natriumsalze oder Ethylendiamintetraessigsäure (EDTA) und ihren Natriumsalze (Na-EDTA) (vgl. US-A 3 951 917, 4 157 434 und EP-A 1 131 243) eingesetzt, letztere auch in Kombination mit Ammoniumsalzen (vgl. US-A 4 062 970). Beschrieben ist auch die Katalysatorabtrennung mit Hilfe komplexbildender Mittel aus der Gruppe des Bisguanidins (vgl. US-A 4 097 458). In den Literaturstellen US-A 4 237 265 und EP-A 1 131 243 ist auch bereits ein kontinuierliches Verfahren zur Katalysatorabtrennung beschrieben.

Aus US-A 4 071 500 war es bekannt, das Abwasser auf pH 11,5 zu stellen und Amine und organische Rückstände mit Toluol als Extraktionsmittel zu extrahieren. Es war nicht vorhersehbar, daß die Abtrennung der Amide ohne Verwendung des Extraktionsmittels überraschend gut verläuft.

Unbefriedigend bei allen bisher bekannten Verfahren ist der Umstand, daß stets verdünnte aminhaltige Lösungen anfallen, deren Aufarbeitung zunehmend Probleme macht.

Der Erfindung liegt deshalb die Aufgabe zugrunde, ein einfaches und hochwirksames Verfahren zur Abtrennung und Rückgewinnung der Aminreste aus dem Abwasser der Katalysatorabtrennung aufzufinden, bei dem die Aminkomponente des Katalysators vollständig abgetrennt und zurückgewonnen wird.

Diese Aufgabe wird erfindungsgemäß durch ein Verfahren gemäß Patentansprüchen 1 bis 3 gelöst.

Bei den Aminen handelt es sich um die bei der Herstellung von Polyphenylenethern im Katalysatorkomplex üblicherweise verwendeten Amine wie n-Dibutylamin, Diethylamin, Picolin, Chinolin, Pyridinbasen, Triisopropylamin, Dimethylisopropanolamin, Trisethanolamin, Triisopropanolamin, Diisopropanolamin und andere. Bei dem für die bekannte Polykondensation verwendeten Katalysatorkomplex handelt es sich üblicherweise um eine Kombination obiger Amine mit einem Kupfersalz wie Kupfer-I-bromid, Kupfer-I-chlorid, Kupfer-II-acetessigester oder Kupfer-II-acetylacetonat. Ein bevorzugter Bereich bei der Menge der eingesetzten Amine liegt bei 2,0 bis 25 Mol pro 100 Mol des Monomeren, die Konzentration der Amine kann aber in der Reaktionsmischung innerhalb weiter Grenzen variieren.

Die Herstellung hochmolekularer Polyphenylenether aus einwertigen Phenolen durch oxidative Kupplungsreaktion mit Sauerstoff bei Temperaturen zwischen 15 und 50°C in Anwesenheit eines Katalysatorkomplexes aus einem Kupfersalz und einem organischen Amin in Gegenwart eines organischen Lösungsmittels ist so bekannt, daß sie hier nicht weiter beschrieben werden muß (vgl. z.B. die US-Patente 3 306 874, 3 306 875, 3 661 848, 3 378 505, 3 639 656 oder 3 642 699). Als organische Lösungsmittel werden Benzol, Toluol, Ethylbenzol und aliphatische $C_6$- bis $C_{10}$-Kohlenwasserstoffe, insbesondere Toluol, verwendet. Der Anteil des Lösungsmittels liegt üblicherweise im Bereich von 1:1 bis 10:1 Gewichtsteilen, d.h. maximal bis zu einem Überschuß des 20-fachen an Lösungsmittel, bezogen auf das monomere Phenol. Als Monomere kommen solche einwertigen Phenole in Betracht, die in den beiden ortho-Stellungen und gegebenenfalls in meta-Position, nicht aber in para-Stellung Alkylsubstituenten aufweisen. Beispiele geeigneter Phenole sind 2,6-Dimethylphenol, 2,6-Diethylphenol, 2-Methyl-6-ethylphenol oder 2,3,6-Trimethylphenol.

Wenn die Polykondensation die gewünschte Ausbeute und das Polymere das gewünschte Molekulargewicht erreicht hat, enthält die Lösung 5 bis 30 Gewichtsprozent Polyphenylenether, (PPE), 0,005 bis 1,5 Gewichtsprozent Metallionen sind 0,1 bis 6,0 Gewichtsprozent Amin sowie gegebenenfalls geringe Mengen anderer Materialien. Diese polyphenylenetherhaltigen Reaktionslösungen werden üblicherweise zur Abtrennung der Metallkomponente des Katalysators mit einer wäßrigen Lösung eines Chelatisierungsmittels, z.B. bestehend aus Ethylendiamintetraessigsäure, abgekürzt EDTA, oder einer wäßrigen Lösung eines Salzes dieser Säure behandelt und es wird die wäßrige Phase als Abwasser abgetrennt (vgl. US-Patente 3 951 917, 4 157 484, 4 026 870, 4 463 164 und 4 071 500).

Durch das Chelatisierungsmittel wird das in der organischen Phase gelöste Amin in das Salz des Chelatisierungsmittels überführt und dadurch in die wäßrige Phase überführt. Bezüglich der Wirkungsweise und der chemischen Zusammensetzung der gebildeten wasserlöslichen Verbindungen wird auf einschlägige Literaturstellen wie "Organic Reagens for Metals" Verlag Hoplein & Williams Ltd., London, E.C.1, (1934) und "Chemie der Komplexverbindungen - Spezieller Teil", F. Hein und B. Heyn, Verlag S. Hirzel, Leipzig (1978) verwiesen.

Nach erfindungsgemäßem Verfahren wird die wäßrige Phase mit einer starken anorganischen Base, vorzugsweise bei Temperaturen von 20 bis 60°C, auf einen pH-Wert größer als 11 eingestellt und das sich absetzende Amin abgeschieden, wobei die Mitverwendung eines Extraktionsmittels ausgeschlossen ist.

Der Zusatz der Base für die Amin-Abtrennung erfolgt in einem üblichen Mischaggregat, wie Rührbehälter oder Pumpen, in welchem die beiden Lösungen innig vermischt werden. Die Aminabtrennung erfolgt in einem üblichen Abscheider, wie Schwerkraftabscheider, Absatzbehälter oder Zentrifugen, in welchen die beiden Phasen getrennt werden. Als starke Base wird bevorzugt Natronlauge eingesetzt.

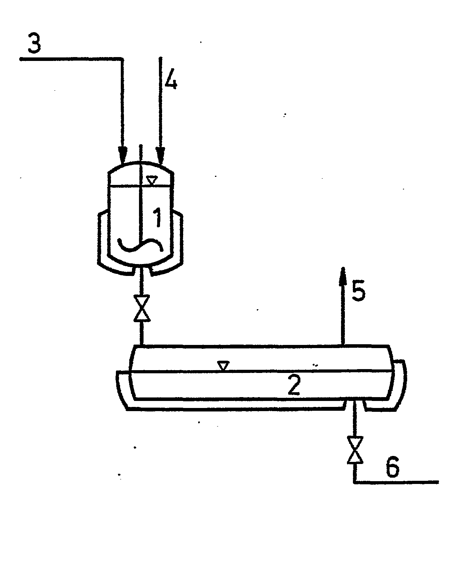

Die Zeichnung zeigt ein Verfahrensbild für das erfindungsgemäße Verfahren zur Rückgewinnung des Amins, bestehend aus einem Mischaggregat und einem Mischaggregat und einem Abscheider für die Amin-Rückgewinnung.

Dem Mischaggregat 1 fließt kontinuierlich wäßrige Lösung aus der Katalysatorabtrennstufe der PPE-Polymeren zu.

Im Mischaggregat 1 wird die wäßrige aminhaltige Lösung 3 mittels NaOH 4 auf pH 11,5 gestellt. Dabei wird eine Temperatur von 60°C nicht überschritten. Das abgeschiedene Amin wird im Abscheider 2 abgetrennt. Die wäßrige Lösung 6 wird weiterverarbeitet oder entsorgt. Das Amin 5 wird nach der Destillation und Rektifikation in den Polymerisationskreislauf zurückgeführt.

**Patentansprüche**

1. Verfahren zur Abwasserreinigung und Aminrückgewinnung bei der Polyphenylenethersynthese, die in einem ersten Schritt die oxidative Kupplung von einwertigen Phenolen, die in den ortho-Stellungen und gegebenenfalls in der meta-Position Alkylsubstituenten tragen, mit Sauerstoff in Gegenwart eines Kupfer-Amin-Katalysators in organischen Lösungsmitteln und in einem zweiten Schritt eine Abtrennung des Kupfer-Amin-Katalysators mit Hilfe wäßriger Lösungen von Komplexierungsmitteln und/oder Kationenaustauscherharzen umfaßt, wobei aus dem Abwasser der Katalysatortrennstufe mit Hilfe einer starken anorganischen Base bei pH-Werten größer als 11 das Amin freigesetzt wird, dadurch gekennzeichnet, daß das Amin in einem Abscheider abgetrennt wird, wobei die Mitverwendung eines Extraktionsmittels ausgeschlossen ist, und für den Kupfer-Amin-Katalysator zurückgeführt wird.

2. Verfahren nach Anspruch 1, dadurch gekennzeichnet, daß als Base für die Amin-Abtrennung Natronlauge eingesetzt wird.

3. Verfahren nach Anspruch 1, dadurch gekennzeichnet, daß bei der Zugabe der Base die Abwassertemperatur 20 bis 60°C beträgt.

**Claims**

1. A process for wastewater treatment and amine recovery in a polyphenylene ether synthesis comprising in a first step the oxidative coupling of a monohydric phenol which is substituted by alkyl in the ortho- and possibly also in the meta-position with oxygen in the presence of a copper/amine catalyst in an organic solvent and in a second step the removing of the copper/amine catalyst by means of an aqueous solution of a complexing agent or a cation exchange resin, the wastewater from the catalyst separation stage being treated with a strong inorganic base at a pH greater than 11 to liberate the amine, which comprises separating off the amine in a separator without the use of an extractant and recycling it for the copper/amine catalyst.

2. A process as claimed in claim 1, wherein the base used to separate off an amine is sodium hydroxide solution.

3. A process as claimed in claim 1, wherein the temperature of the wastewater at the time of addition of the base is from 20 to 60°C.

**Revendications**

1. Procédé d'épuration des eaux usées et de récupération d'amines dans la synthèse de poly(oxyphénylène) qui comprend, dans une première étape, la copulation par voie d'oxydation de phénols monovalents qui portent des substituants alkyle dans les positions ortho et éventuellement dans la position méta, avec de l'oxygène en présence d'un catalyseur de cuivre-amine dans des solvants organiques et, dans une seconde étape, une séparation du catalyseur de cuivre-amine à l'aide de solutions aqueuses de complexants et/ou de résines échangeuses de cations, l'amine étant libérée à partir des eaux usées de l'étape de séparation du catalyseur à l'aide d'une base inorganique forte à des pH supérieurs à 11, caractérisé en ce que l'amine est séparée dans un séparateur où elle se dépose, l'utilisation simultanée d'un produit d'épuisement étant exclue, et en ce qu'elle est réutilisée pour le catalyseur de cuivre-amine.

2. Procédé selon la revendication 1, caractérisé en ce qu'on utilise de la lessive de soude comme base pour la séparation de l'amine.

3. Procédé selon la revendication 1, caractérisé en ce que la température des eaux usées se situe entre 20 et 60°C lors de l'addition de la base.